# EUROPÄISCHE PATENTSCHRIFT

(11) **EP 3 477 727 B1**
(45) Veröffentlichungstag und Bekanntmachung des Hinweises auf die Patenterteilung: **20.01.2021**
(21) Anmeldenummer: 17198359.6
(22) Anmeldetag: 25.10.2017
(51) Int. Cl.: H01M 2/02, H01M 2/04, H01M 2/06, H01M 2/08, H01M 12/06, H01M 12/08

(54) **ENERGIESPEICHERVORRICHTUNG UND HERSTELLUNGSVERFAHREN**
ENERGY STORAGE DEVICE AND METHOD OF MANUFACTURING SAME
DISPOSITIF DE STOCKAGE D'ÉNERGIE ET PROCÉDÉ DE FABRICATION

(43) Veröffentlichungstag der Anmeldung: 01.05.2019
(60) Teilanmeldung: 20214304.6
(73) Patentinhaber: VARTA Microbattery GmbH, 73479 Ellwangen Jagst (DE)
(72) Erfinder: Krebs, Martin, 73494 Rosenberg (DE)
(74) Vertreter: Patentanwaltskanzlei Cartagena

(56) Entgegenhaltungen:
- EP-A1- 1 841 001
- AT-B1- 514 871
- CH-A5- 694 715
- DE-A1- 2 921 687
- DE-T2- 60 014 632
- GB-A- 2 477 552

## Beschreibung

Die Erfindung betrifft eine Energiespeichervorrichtung mit einem Verbund aus einer schichtförmigen positiven Elektrode, einer schichtförmigen negativen Elektrode und einem schichtförmigen Separator, der zwischen der schichtförmigen positiven Elektrode und der schichtförmigen negativen Elektrode angeordnet ist.

Energiespeichervorrichtungen mit einem solchen Aufbau sind beispielsweise aus der WO 2011/151263 A1 bekannt. Wie dort beschrieben ist, lassen sich derartige Schichtverbunde insbesondere mit Hilfe von Druckverfahren, beispielsweise Siebdruckverfahren, herstellen. Bevorzugt sind die beschriebenen Schichtverbünde in einem Foliengehäuse angeordnet, das mit Hilfe eines umlaufenden Siegelrahmens, der bevorzugt aus einer thermoaktivierbaren oder selbstklebenden Folie gebildet wird, versiegelt ist und das den Elektroden-Separator-Stapel - abgesehen von nach außen geführten elektrischen Anschlusskontakten - dichtend umschließt.

Aus der WO 2011/131627 A1 ist eine Druckpaste bekannt, die Anwendung bei der Herstellung von Separator-Elektrolyt-Schichten findet, wie sie die in der WO 2011/151263 A1 beschriebenen gedruckten Energiespeichervorrichtungen aufweisen kann.

Auch aus der DE 60014632 T2 ist es bekannt, Elektroden aus einem pastösen Material zu bilden und zu einer Kathoden-/Elektroden-Schichtzu extrudieren.

Aus der AT 514871 B1 ist eine Batteriezelle, insbesondere zur Verwendung in einem Antriebssystem eines Fahrzeuges, bekannt. Die Batteriezelle verfügt über Stromabnehmer, welche jeweils mit Elektroden der Zelle in leitendem Kontakt stehen. Zumindest einer der Stromabnehmer ist fluiddurchlässig ausgebildet. Die Besonderheit der Batteriezelle liegt darin, dass sie ein Distanzelement aus einem flexiblen komprimierbaren Material umfasst, welches als Rahmen ausgebildet ist. Dieses Distanzelement soll Volumenänderungen, welche insbesondere im Laufe von Lade- und Entladezyklen auftreten, ausgleichen können. In einer Variante ist die Zelle als Lithium-Luft-Zelle ausgebildet.

Die aus der WO 2011/151263 A1 bekannte Versiegelung mittels des Siegelrahmens führt insbesondere bei Verwendung mehrlagiger Verbundfolien, die als Barriereschicht eine dünne Lage aus einem Metall wie Aluminium aufweisen, regelmäßig zu Problemen. Die Versiegelung erfolgt in der Regel unter Anwendung von Druck und erhöhten Temperaturen. Hierbei kann es jedoch im Bereich der Anschlusskontakte zu elektrischen Kurzschlüssen kommen.

Aus der EP 1841001 A1 sind Energiespeichervorrichtungen bekannt, die über einen Siegelrahmen aus einem Dichtungsharz verfügen, der ein Auslaufen einer Elektrolytlösung verhindern sollen.

Auch die Verwendung der aus der WO 2011/131627 A1 bekannten Druckpaste ist nicht frei von Problemen. Mittels der Druckpaste hergestellte Separator-Elektrolyt-Schichten können mit sehr geringen Schichtdicken hergestellt werden, weisen aber nicht selten auch eine gewisse Anfälligkeit zur Perforation auf.

Der vorliegenden Erfindung lag die Aufgabe zugrunde, Energiespeichervorrichtungen mit einem Schichtaufbau bereitzustellen, wie er aus der WO 2011/151263 A1 bekannt ist, allerdings unter Umgehung der beschriebenen Probleme.

Zur Lösung dieser Aufgabe schlägt die Erfindung eine Energiespeichervorrichtung mit den in Anspruch 1 genannten Merkmalen sowie ein Verfahren mit den in Anspruch 6 genannten Merkmalen vor.

Die Energiespeichervorrichtung gemäß der Erfindung umfasst wie die aus dem Stand der Technik bekannten Energiespeichervorrichtungen einen Verbund aus einer schichtförmigen positiven Elektrode, einer schichtförmigen negativen Elektrode und einem schichtförmigen Separator, der zwischen der schichtförmigen positiven Elektrode und der schichtförmigen negativen Elektrode angeordnet ist. Hierbei umfassen die Elektroden jeweils eine elektrochemische Aktivkomponente.

Die Elektroden der Energiespeichervorrichtung werden in einigen bevorzugten Ausführungsformen mittels eines Druckverfahrens, insbesondere mittels eines Siebdruckverfahrens, gebildet.

Die erfindungsgemäße Energiespeichervorrichtung kann grundsätzlich wiederaufladbar oder nicht wiederaufladbar ausgebildet sein. Bevorzugt handelt es sich bei der Energiespeichervorrichtung um eine Zink-Luft-Zelle. Die elektrochemischen Aktivkomponenten für die positive und die negative Elektrode eines solchen elektrochemischen Systems sind dem Fachmann bekannt.

Zur Herstellung der negativen Elektrode einer Zink-Luft-Zelle kann eine druckfähige Zinkpaste Verwendung finden, die als elektrochemische Aktivkomponente Zinkpulver sowie weiterhin einen geeigneten Binder und ein geeignetes Lösungs- und/oder Dispergiermittel umfasst. Die positive Elektrode einer Zink-Luft-Zelle (die Luftkathode) kann grundsätzlich gleichfalls aus einer druckfähigen Paste gebildet werden. Diese umfasst gegebenenfalls als elektrochemische Aktivkomponente ein elektrokatalytisch aktives Material (z.B. ein Edelmetall wie Platin oder Palladium oder ein Manganoxid) sowie Ruß und/oder Graphit als Leitmaterial sowie, soweit erforderlich, einen geeigneten Binder, beispielsweise einen partikulären Kunststoffbinder. Geeignete Materialien zur Herstellung einer Luftkathode sind beispielsweise in der DE 3722019 A1 beschrieben.

Im Gegensatz zu der aus der WO 2011/131627 A1 bekannten Vorgehensweise ist der gemäß der vorliegenden Erfindung verwendete schichtförmige Separator nicht mittels eines Druckverfahrens gebildet. Vielmehr umfasst er ein poröses Flächengebilde und einen Elektrolyten, welcher beim Laden und/oder Entladen der Energiespeichervorrichtung einen lonenstrom zwischen den Elektroden zu gewährleistet. Während der Elektrolyt mittels eines Druckverfahrens verarbeitbar ist, wird das poröse Flächengebilde als separate Komponente bereitgestellt.

Das poröse Flächengebilde dient unter anderem dazu, die Elektroden elektrisch voneinander zu isolie-ren. Als poröses Flächengebilde kommt insbesondere eine poröse Folie, beispielsweise aus einem Polyolefin oder aus einem Polyester, in Frage. In vielen bevorzugten Ausführungsformen ist das Flächengebilde ein Vlies oder ein Filz oder ein textiles Gewebe. Diese können beispielsweise aus Polyolefin- oder Polyester-Filamenten gefertigt sein.

Der verwendete Elektrolyt ist abhängig vom jeweils zum Einsatz kommenden elektrochemischen System. Beispielsweise kann es sich bei dem Elektrolyten einer Zink-Luft-Zelle um eine Lauge, beispielsweise um Kalilauge, oder um einen neutralen oder nahezu neutralen Elektrolyten, beispielsweise Ammoniumchlorid- oder Zinkchlorid-Lösung, handeln.

Weiterhin umfasst die Energiespeichervorrichtung ein Gehäuse aus einem ersten Gehäuseteil und einem zweiten Gehäuseteil. Bei diesen handelt es sich bevorzugt um zwei separate Gehäuseteile. Es ist aber grundsätzlich möglich, die beiden Gehäuseteile beispielsweise durch Knicken oder Falten aus einem geeigneten Gehäusematerial zu bilden, so dass die Gehäuseteile über eine Knick- oder Faltlinie miteinander verbunden sind.

Besonders zeichnet sich die Energiespeichervorrichtung dadurch aus, dass das poröse Flächengebilde einen zentralen Bereich umfasst, in dem seine Poren mit dem Elektrolyten befüllt sind, sowie einen streifenförmigen, den zentralen Bereich umschließenden Randbereich, in dem die Poren des porösen Flächengebildes nicht mit dem Elektrolyten befüllt sind. Das erste Gehäuseteil und das zweite Gehäuseteil sind, bevorzugt an ihren Rändern, über einen umlaufenden Siegelrahmen miteinander verbunden, der aus einem Siegelmittel gebildet ist, das in dem Randbereich auf das poröse Flächengebilde aufgebracht wurde.

Die erfindungsgemäße Konstruktion wirkt einer Perforation des Separators entgegen, das verwendete Flächengebilde ist diesbezüglich sehr viel resistenter als durch ein Druckverfahren hergestellte Separatorschichten aus einem partikulären Material. Auch wurden keine Kurzschlüsse im Bereich des Siegelrahmens mehr beobachtet.

In der Regel weist das poröse Flächengebilde zwei Flachseiten und einen umlaufenden Rand auf. Zum Einbringen des Elektrolyten in die Poren des porösen Flächengebildes kann der Elektrolyt nur auf eine der Flachseiten oder aber auch auf beide Seiten aufgebracht werden. Gleiches gilt für das Siegelmittel. Auch dieses kann zur Bildung des Siegelrahmens nur auf eine der Flachseiten oder aber auch auf beide Seiten aufgebracht werden.

Innerhalb des Verbundes aus der schichtförmigen positiven Elektrode, der schichtförmigen negativen Elektrode und dem schichtförmigen Separator bestehen großflächige, zweidimensionale Kontaktbereiche zwischen dem Separator und den Elektroden. Es ist bevorzugt, dass die positive und die negative Elektrode auf unterschiedlichen Seiten des Separators in flächigem, unmittelbarem Kontakt mit dem zentralen Bereich stehen.

Energiespeichervorrichtungen mit den vorstehend beschriebenen Merkmalen können insbesondere gemäß den nachfolgende beschriebenen Varianten A und B ausgebildet sein, wobei es sich allerdings nur bei Variante A um eine erfindungsgemäße Weiterbildung der Energiespeichervorrichtung handelt:

### Variante A

Gemäß Variante A ist die negative Elektrode eine metallbasierte Anode, die als elektrochemische Aktivkomponente ein Metall umfasst, das beim Entladen der Energiespeichervorrichtung oxidiert wird, und die positive Elektrode ist eine Luftkathode und umfasst als elektrochemische Aktivkomponente einen Katalysator, der eine Reduktion von Luftsauerstoff unter Elektronenaufnahme in der Luftkathode ermöglicht. Kurzum, die Energiespeichervorrichtung gemäß der Erfindung ist eine Metall-Luft-Zelle.

Bei dieser Variante ist es bevorzugt, dass das erste Gehäuseteil aus einer Folie besteht während als zweites Gehäuseteil eine Kunststoffschicht dient, in die eine metallische Ableiterstruktur eingebettet ist, die mit der Luftkathode in unmittelbarem Kontakt steht.

Bevorzugt ist die Luftkathode als Gasdiffusionselektrode ausgebildet. In diesem Fall umfasst die Luftkathode bevorzugt neben den erwähnten Komponenten Katalysator und Leitmaterial einen hydrophoben Binder, beispielsweise einen Binder aus Teflon (PTFE).

Als oxidierbares Metall kommt bevorzugt Zink zum Einsatz.

Bei der Folie, aus der das erste Gehäuseteil besteht, handelt es sich bevorzugt um eine Kunststofffolie oder Kunststoffverbundfolie. Als Gehäusematerialien für Energiespeichervorrichtungen geeignete Kunststofffolien und Kunststoffverbundfolien sind dem Fachmann grundsätzlich bekannt. Geeignete Kunststoffverbundfolien umfassen in der Regel eine Lage aus Metall sowie zwei Lagen aus Kunststoff, wobei die Lage aus Metall zwischen den zwei Kunststofflagen angeordnet ist.

Bei der Kunststoffschicht, aus der das zweite Gehäuseteil besteht, handelt es sich bevorzugt um eine Schicht aus einem hydrophoben Kunststoff, insbesondere dem erwähnten PTFE. Besonders bevorzugt ist die Schicht eine mikroporöse Membran aus gerecktem (expandiertem) Polytetrafluorethylen (ePTFE), die unter dem Handelsnamen GORE-TEX® vertrieben wird.

Bei der Ableiterstruktur, die in die Kunststoffschicht eingebettet ist, handelt es sich bevorzugt um ein Metallgitter oder um ein Metallnetz, beispielsweise aus Nickel oder aus einer Nickellegierung.

### Variante B

Gemäß Variante B umfassen die Elektroden als elektrochemische Aktivkomponente beide jeweils ein Material, das sich beim Laden und/oder Entladen der Energiespeichervorrichtung chemisch umwandelt. Beispiele für eine solche Zelle sind die erwähnte Zink-Braunstein-Zelle, die Nickel-Metallhydrid-Zelle und die Lithium-Ionen-Zelle.

Bei dieser Variante ist es bevorzugt, dass das erste Gehäuseteil und das zweite Gehäuseteil beide jeweils aus einer Folie, insbesondere aus dem gleichen Material, bestehen. Auch hier ist die Folie bevorzugt eine der als Gehäusematerial für Energiespeichervorrichtungen geeigneten Kunststofffolien oder Kunststoffverbundfolien.

Bei allen Ausführungsformen ist es bevorzugt, dass der Siegelrahmen gemeinsam mit den Gehäuseteilen einen Hohlraum einschließt, in dem der zentrale Bereich des Flächengebildes angeordnet ist.

Der umlaufende Siegelrahmen ist bevorzugt in den Randbereich des Flächengebildes eingebettet. Hierunter soll verstanden werden, dass Poren des Flächengebildes in dem Randbereich mit dem Siegelmittel befüllt sind, so dass der Siegelrahmen das Flächengebilde durchdringt und auf dessen beiden Flachseiten jeweils aus dem Flächengebilde heraustritt.

In aller Regel umfasst die Energiespeichervorrichtung einen elektrischen Leiter, der mit der mindestens einen negativen Elektrode elektrisch verbunden und aus dem Gehäuse herausgeführt ist. Im einfachsten Fall kann es sich bei diesem Leiter um eine elektrisch leitende Schicht handeln, die auf einer ins Innere des Gehäuses weisenden Seite eines der Gehäuseteile angeordnet ist. Eine solche Schicht kann gleichzeitig als Stromkollektor dienen. In besonders bevorzugten Ausführungsformen kontaktiert die Schicht daher großflächig die negative Elektrode. Der Teil der Schicht, der aus dem Gehäuse herausgeführt ist, ist bevorzugt bahnförmig ausgebildet.

Es ist auch möglich, dass die negative Elektrode einen separaten Stromkollektor aufweist, beispielsweise ein metallisiertes Vlies oder ein metallisiertes Gewebe, das elektrisch mit dem aus dem Gehäuse herausgeführten Leiter elektrisch verbunden ist.

Der mit der negativen Elektrode verbundene elektrische Leiter und gegebenenfalls ein daran gekoppelter Stromkollektor sind bevorzugt auf Basis von Silber, Kupfer und/oder Graphit ausgebildet. Geeignet sind beispielsweise Silberleitpasten, die auch mittels eines Druckverfahrens applizierbar sind. Alternativ können auch Metallfolien als Stromkollektoren und/oder als elektrische Leiter verwendet werden. Auch das Aufbringen dünner Metallschichten auf die erwähnte ins Innere des Gehäuses weisende Seite eines der Gehäuseteile mittels eines PVD- oder CVD-Verfahrens ist möglich.

Die Energiespeichervorrichtung umfasst in der Regel weiterhin einen elektrischen Leiter, der mit der mindestens einen positiven Elektrode elektrisch verbunden und aus dem Gehäuse herausgeführt ist. Bei diesem elektrischen Leiter handelt es sich insbesondere im Fall der Variante B um eine elektrisch leitende Schicht auf einer ins Innere des Gehäuses weisenden Seite eines der Gehäuseteile angeordnet ist. Diese kann ausgebildet sein wie die mit der negativen Elektrode ausgebildete Schicht. Bevorzugt besteht ist sie auf Basis von Silber, Nickel oder Graphit ausgebildet. Ebenfalls wie im Fall der negativen Elektrode kann die Schicht selbst als Stromkollektor dienen oder aber an einen separaten Stromkollektor angekoppelt sein.

Im Fall der Variante A handelt es sich bei dem elektrischen Leiter bevorzugt um die erwähnte in die Kunststoffschicht eingebettete Leiterstruktur, beispielsweise um ein metallisches Netz oder um ein metallisches Gitter An den Rändern der Kunststoffschicht kann der eingebettete Leiter von außerhalb des Gehäuses elektrisch kontaktiert werden.

Bevorzugt zeichnet sich die erfindungsgemäße Energiespeichervorrichtung zusätzlich durch mindestens eines der folgenden Merkmale aus:
- Die positive Elektroden ist rechteckig oder quadratisch ausgebildet.
- Die negative Elektrode ist rechteckig oder quadratisch ausgebildet.
- Das poröse Flächengebilde ist rechteckig oder quadratisch ausgebildet.
- Die positive Elektrode weist eine Breite im Bereich von 0,2 mm bis 10 cm und eine Länge im Bereich von 0,2 mm bis 20 cm auf.
- Die negative Elektrode weist eine Breite im Bereich von 0,5 cm bis 10 cm und eine Länge im Bereich von 0,5 cm bis 20 cm auf.
- Das poröse Flächengebilde weist eine Breite im Bereich von 0,6 cm bis 12 cm und eine Länge im Bereich von 0,6 cm bis 22 cm auf.
- Die positive Elektrode weist eine Dicke im Bereich von 2 µm bis 200 µm auf.
- Die negative Elektrode weist eine Dicke im Bereich von 10 µm bis 200 µm auf.
- Der Separator weist eine Dicke im Bereich von 10 µm bis 100 µm auf.

Ein Verfahren zur Herstellung der beschriebenen elektrochemischen Energiespeichervorrichtung umfasst stets die folgenden Schritte:
- In einem ersten Schritt wird eine Separator-Siegelrahmen-Einheit hergestellt: Hierzu wird das beschriebene poröse Flächengebilde bereitgestellt. Dessen Poren werden unter Ausbildung des zentralen Bereichs und des den zentralen Bereich umschließenden Randbereichs mit dem Elektrolyten befüllt. Weiterhin wird das Siegelmittel in dem streifenförmigen, den zentralen Bereich umschließenden Randbereich zur Ausbildung des umlaufenden Siegelrahmens aufgebracht.
- In einem weiteren Schritt erfolgt die Bildung des oben beschriebenen Verbundes durch Kombination der Separator-Siegelrahmen-Einheit mit der schichtförmigen positiven Elektrode und der schichtförmigen negativen Elektrode.

Für die Kombination mit der Separator-Siegelrahmen-Einheit werden die positive Elektrode und die negative Elektrode bevorzugt in Form von Schichten auf dem ersten und dem zweiten Gehäuseteil bereitgestellt, beispielsweise mittels eines Druckverfahrens. Gegebenenfalls werden auf die Gehäuseteile in einem vorgeschalteten Schritt noch Ableiterstrukturen aufgebracht.

Das erste und das zweite Gehäuseteil werden dann über den Siegelrahmen miteinander verbunden.

Bei dem Siegelmittel handelt es sich in besonders bevorzugten Ausführungsformen um eine Klebstoffmasse, die mittels eines Druckverfahrens oder mittels einer Klebstoffraupe applizierbar ist. Hierbei lässt sich grundsätzlich jeder Klebstoff verarbeiten, der gegenüber dem jeweils verwendeten Elektrolyten resistent ist und eine ausreichende Haftung zu den verwendeten Gehäuseteilen ausbilden kann.

Bei dem Siegelmittel kann es sich insbesondere auch um eine gelöste Polymerzusammensetzung handeln, zu deren Verfestigung enthaltenes Lösungsmittel entfernt werden muss.

Es ist auch möglich, als Siegelmittel eine thermoaktivierbare Folie, insbesondere eine Schmelzfolie, oder eine selbstklebende Folie, zu verwenden. Beispielsweise ist es möglich, zur Ausbildung des Siegelrahmens auf beide Flachseiten des porösen Flächengebildes eine Schmelzfolie zu positionieren und unter Druck und hoher Temperatur (> der Schmelztemperatur der Schmelzfolie) die Ränder des ersten und des zweiten Gehäuseteils auf die Schmelzfolie zu pressen.

Das Siegelmittel wird in den meisten Ausführungsformen in flüssiger Form auf die Randbereich aufgebracht oder aber bei der Bildung des Siegelmittels verflüssigt. Gegebenenfalls kann es erforderlich sein, es abkühlen und aushärten zu lassen.

Weitere Merkmale, Einzelheiten und Vorzüge der Erfindung ergeben sich aus den Ansprüchen und der Zusammenfassung, deren beider Wortlaut durch Bezugnahme zum Inhalt der Beschreibung gemacht wird, der folgenden Beschreibung bevorzugter Ausführungsformen der Erfindung sowie anhand der Zeichnung. Hierbei zeigt schematisch:
Fig. 1 die Herstellung einer Ausführungsform einer Energiespeichervorrichtung gemäß obiger Variante B sowie im Querschnitt die hergestellte Energiespeichervorrichtung.
Fig. 2 im Querschnitt eine Ausführungsform einer erfindungsgemäßen Energiespeichervorrichtung gemäß obiger Variante A.

Zur Herstellung einer Ausführungsform einer Energiespeichervorrichtung 100 wird eine Separator-Siegelrahmen-Einheit gemäß Variante B gebildet. Hierzu wird unter Ausbildung des zentralen Bereichs 105a und des den zentralen Bereich 105a umschließenden Randbereichs 105b auf das Vlies 105 ein geeigneter Elektrolyt aufgedruckt. Im Bereich 105a sind die Poren des Vlieses 105 mit dem Elektrolyten befüllt. Der Bereich 105b ist hingegen frei von Elektrolyt. In diesem Bereich wird zur Ausbildung eines umlaufenden Siegelrahmens 108 als Siegelmittel ein Klebstoff aufgetragen.

In einem weiteren Schritt wird die gebildete Separator-Siegelrahmen-Einheit mit einer schichtförmigen positiven Elektrode 102 und einer schichtförmigen negativen Elektrode 103 kombiniert. Diese werden in vorgeschalteten Schritten auf den Gehäuseteilen 106 und 107 mittels eines Druckverfahrens hergestellt. Hierzu werden auf die Gehäuseteile zunächst metallische Schichten 109 und 110 aufgebracht, die als elektrische Leiter fungieren sollen. Auf diese wird unter Ausbildung der Elektroden 102 und 103 jeweils eine Schicht aus einem Elektrodenmaterial, das eine geeignete elektrochemische Aktivkomponente umfasst, aufgedruckt.

Bei der Kombination der Separator-Siegelrahmen-Einheit mit einer schichtförmigen positiven Elektrode 102 und einer schichtförmigen negativen Elektrode 103 verbindet der Siegelrahmen die Gehäuseteile 106 und 107 miteinander. Gemeinsam schließen die Gehäuseteile 106 und 107 und der Siegelrahmen 108 einen Hohlraum ein, in dem der zentralen Bereich 105a des Flächengebildes 105 und die Elektroden 102 und 103 angeordnet sind.

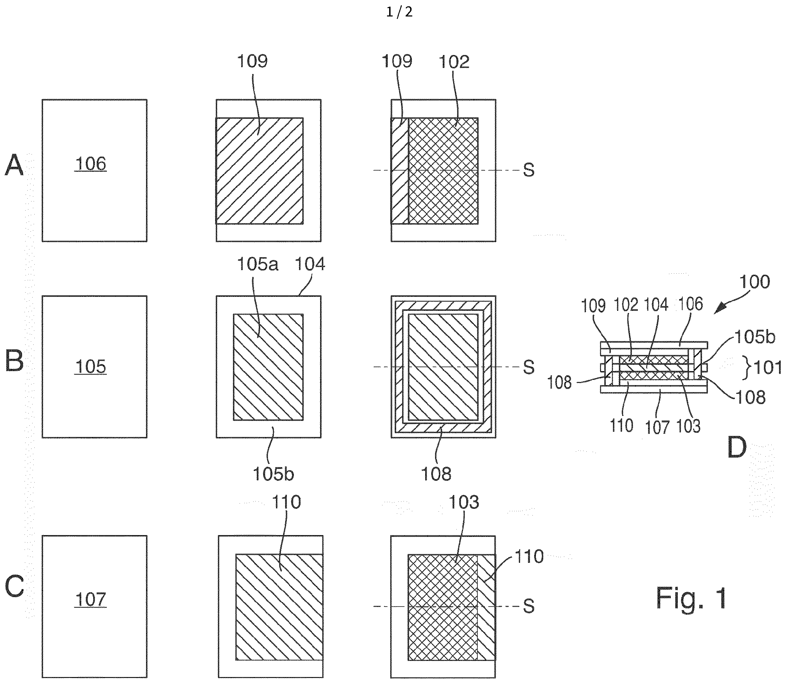

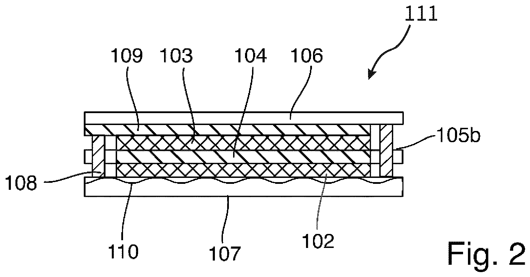

Bei der in Fig. 2 dargestellten Energiespeichervorrichtung 111 handelt es sich um eine Metall-Luft-Zelle. Diese weist einen sehr ähnlichen Aufbau wie die in Fig. 1 dargestellte Energiespeichervorrichtung auf. Es gibt allerdings einen wesentlichen Unterschied. Vorliegend übernimmt nämlich das Gehäuseteil 107 eine Ableiterfunktion für die Luftkathode 102. Das Gehäuseteil 107 umfasst eine mikroporöse PTFE-Schicht, in die das Metallnetz 110 als elektrischer Leiter eingebettet ist. Eine separate Ableiterschicht ist nicht vorgesehen. An der der Luftkathode 102 zugewandten Seite des Gehäuseteils 107 ist das Metallnetz 110 von außerhalb der PTFE-Schicht zugänglich und tritt unmittelbar mit der Luftkathode 102 in Kontakt. Über den Siegelrahmen 108 ist die PTFE-Schicht mit dem Gehäuseteil 106 verbunden.

## Patentansprüche

1. Energiespeichervorrichtung (111) mit den Merkmalen
a: die Energiespeichervorrichtung (111) umfasst einen Verbund aus einer schichtförmigen positiven Elektrode (102), einer schichtförmigen negativen Elektrode (103) und einem schichtförmigen Separator (104), der zwischen der schichtförmigen positiven Elektrode (102) und der schichtförmigen negativen Elektrode (103) angeordnet ist,
b: die Elektroden (102, 103) umfassen jeweils eine elektrochemische Aktivkomponente,
c: derschichtförmige Separator (104) umfasst ein poröses Flächengebilde (105),
d: die Energiespeichervorrichtung (111) umfasst einen Elektrolyten, der beim Laden und/oder Entladen der Energiespeichervorrichtung (111) einen lonenstrom zwischen den Elektroden (102, 103) gewährleistet, und
e: die Energiespeichervorrichtung (111) umfasst ein Gehäuse (105) aus einem ersten Gehäuseteil (106) und einem zweiten Gehäuseteil (107),
f. die negative Elektrode (103) ist eine metallbasierte Anode, die als elektrochemische Aktivkomponente ein Metall umfasst, das beim Entladen der Energiespeichervorrichtung (111) oxidiert wird, und
g. die positive Elektrode (102) ist eine Luftkathode und umfasst als elektrochemische Aktivkomponente einen Katalysator, der eine Reduktion von Luftsauerstoff unter Elektronenaufnahme in der Luftkathode ermöglicht,
sowie den zusätzlichen kennzeichnenden Merkmalen
h: das poröse Flächengebilde (105) umfasst einen zentralen Bereich, in dem seine Poren mit dem Elektrolyten befüllt sind, sowie einen streifenförmigen, den zentralen Bereich umschließenden Randbereich, in dem die Poren des porösen Flächengebildes (105) nicht mit dem Elektrolyten befülltsind, und
i: das erste Gehäuseteil (106) und das zweite Gehäuseteil (107) sind über einen umlaufenden Siegelrahmen (108) miteinander verbunden, der aus einem Siegelmittel gebildet ist, das in dem Randbereich auf das poröse Flächengebilde (105) aufgebracht wurde.

2. Energiespeichervorrichtung nach Anspruch 1 mit einer Kombination der folgenden zusätzlichen Merkmale:
a: Das erste Gehäuseteil (106) besteht aus einer Folie.
b: Als zweites Gehäuseteil (107) dient eine Kunststoffschicht, in die eine metallische Ableiterstruktur (110) eingebettet ist, die mit der Luftkathode (102) in unmittelbarem Kontakt steht.

3. Energiespeichervorrichtung nach einem der vorhergehenden Ansprüche mit einer Kombination der folgenden zusätzlichen Merkmale:
a: Der Siegelrahmen (108) schließt gemeinsam mit den Gehäuseteilen (106, 107) einen Hohlraum ein, in dem der zentralen Bereich des Flächengebildes (105) angeordnet ist.
b: Der umlaufende Siegelrahmen ist in den Randbereich des porösen Flächengebildes (105) eingebettet.

4. Energiespeichervorrichtung nach einem der vorhergehenden Ansprüche mit einer Kombination der folgenden zusätzlichen Merkmale:
a: Sie umfasst einen elektrischen Leiter (109), der mit der mindesten einen negativen Elektrode (103) elektrisch verbunden und aus dem Gehäuse (105) herausgeführt ist.
b. Bei dem elektrischen Leiter (109) handelt es sich um eine elektrisch leitende Schicht auf einer ins Innere des Gehäuses (105) weisenden Seite des ersten Gehäuseteils (106).

5. Energiespeichervorrichtung nach einem der vorhergehenden Ansprüche 2 bis 4 mit einer Kombination der folgenden zusätzlichen Merkmale:
a: Sie umfasst einen elektrischen Leiter (110), der mit der mindesten einen positiven Elektrode (102) elektrisch verbunden und aus dem Gehäuse (105) herausgeführt ist.
b. Bei dem elektrischen Leiter (110) handelt es sich um eine elektrisch leitende Schicht auf einer ins Innere des Gehäuses (105) weisenden Seite des zweiten Gehäuseteils (107) oder um die metallische Ableiterstruktur, die in die Kunststoffschicht des zweiten Gehäuseteils (107) eingebettet ist.

6. Verfahren zur Herstellung einer elektrochemischen Energiespeichervorrichtung (111) nach einem der vorhergehenden Ansprüche mit den Schritten:
a: Herstellung einer Separator-Siegelrahmen-Einheit durch
- Bereitstellung des porösen Flächengebildes (105),
- Befüllen der Poren des Flächengebildes (105) mit dem Elektrolyten unter Ausbildung des zentralen Bereichs und des den zentralen Bereich umschließenden Randbereichs,
- Aufbringen des Siegelmittels in dem streifenförmigen Randbereich zur Ausbildung des umlaufenden Siegelrahmens (108),
und
b: Bildung des Verbundes aus der Elektrode (102), der Elektrode (103) und dem Separator (104) durch Kombination der Separator-Siegelrahmen-Einheit mit der schichtförmigen positiven Elektrode (102) und der schichtförmigen negativen Elektrode (103).,
wobei
die negative Elektrode (103) eine metallbasierte Anode ist, die als elektrochemische Aktivkomponente ein Metall umfasst, das beim Entladen der Zelle (111) oxidiert wird, und die positive Elektrode (102) eine Luftkathode ist und als elektrochemische Aktivkomponente einen Katalysator umfasst, der eine Reduktion von Luftsauerstoff unter Elektronenaufnahme in der Luftkathode ermöglicht.

## Claims

1. Energy storage device (111) having the features
a: the energy storage device (111) comprises a composite of a positive electrode (102) in the for of a layer, a negative electrode (103) in the form of a layer and a separator (104) in the form of a layer which is arranged between the positive electrode (102) in the form of a layer and the negative electrode (103) in the form of a layer,
b: the electrodes (102, 103) each comprise an electrochemical active component,
c: the separator (104) in the form of a layer comprises a porous sheet structure (105),
d: the energy storage device (111) comprises an electrolyte which ensures an ion current between the electrodes (102, 103) during charging and/or discharging of the energy storage device (111), and
e: the energy storage device (111) comprises a housing (105) made up of a first housing part (106) and a second housing part (107),
f. the negative electrode (103) is a metal-based anode which comprises a metal which is oxidized during charging of the energy storage device (111) as electrochemical active component, and
g. the positive electrode (102) is an air cathode and comprises a catalyst, which makes reduction of atmospheric oxygen with uptake of electrons into the air cathode possible, as electrochemical active component,
and also the additional characterizing features
h: the porous sheet structure (105) comprises a central region in which its pores are filled with the electrolyte and also a strip-like peripheral region enclosing the central region, in which peripheral region the pores of the porous sheet structure (105) are not filled with the electrolyte, and
i: the first housing part (106) and the second housing part (107) are joined to one another by means of a circumferential sealing frame (108) which is formed by a sealant which has been applied to the porous sheet structure (105) in the peripheral region.

2. Energy storage device according to Claim 1 having a combination of the following additional features:
a: the first housing part (106) consists of a film,
b: a polymer layer, in which a metallic power outlet lead structure (110), which is in direct contact with the air cathode (102), is embedded, serves as second housing part (107).

3. Energy storage device according to either of the preceding claims having a combination of the following additional features:
a: the sealing frame (108) together with the housing parts (106, 107) encloses a hollow space in which the central region of the sheet structure (105) is arranged,
b: the circumferential sealing frame is embedded in the peripheral region of the porous sheet structure (105).

4. Energy storage device according to any of the preceding claims having a combination of the following additional features:
a: it comprises an electric conductor (109) which is electrically connected to the at least one negative electrode (103) and is conducted out of the housing (105),
b. the electric conductor (109) is an electrically conductive layer on a side of the first housing part (106) facing the interior of the housing (105) .

5. Energy storage device according to any of preceding Claims 2 to 4 having a combination of the following additional features:
a: it comprises an electric conductor (110) which is electrically connected to the at least one positive electrode (102) and is conducted out of the housing (105),
b. the electric conductor (110) is an electrically conductive layer on a side of the second housing part (107) facing the interior of the housing (105) or is the metallic power outlet lead structure which is embedded in the polymer layer of the second housing part (107).

6. Process for producing an electrochemical energy storage device (111) according to any of the preceding claims, comprising the steps:
a: production of a separator-sealing frame unit by
- provision of the porous sheet structure (105),
- filling of the pores of the sheet structure (105) with the electrolyte to form the central region and the peripheral region enclosing the central region,
- application of the sealant in the strip-like peripheral region to form the circumferential sealing frame (108),
and
b: formation of the composite of the electrode (102), the electrode (103) and the separator (104) by combining the separator-sealing frame unit with the positive electrode (102) in the form of a layer and the negative electrode (103) in the form of a layer,
wherein
the negative electrode (103) is a metal-based anode which comprises a metal, which is oxidized during discharging of the cell (111), as electrochemical active component and the positive electrode (102) is an air cathode and comprises a catalyst, which makes reduction of atmospheric oxygen with uptake of electrons into the air cathode possible, as electrochemical active component.

## Revendications

1. Dispositif de stockage d'énergie (111) présentant les caractéristiques suivantes :
a : le dispositif de stockage d'énergie (111) comprend un composite constitué d'une électrode positive en couches (102), d'une électrode négative en couches (103) et d'un séparateur en couches (104) disposé entre l'électrode positive en couches (102) et l'électrode négative en couches (103),
b : les électrodes (102, 103) comprennent respectivement un constituant électrochimique actif,
c : le séparateur en couches (104) comprend une feuille poreuse (105),
d : le dispositif de stockage d'énergie (111) comprend un électrolyte qui permet le passage d'un courant ionique entre les électrodes (102, 103) pendant la charge et/ou la décharge du dispositif de stockage d'énergie (111), et
e : le dispositif de stockage d'énergie (111) comprend un boîtier (105) constitué d'une première partie de boîtier (106) et d'une deuxième partie de boîtier (107),
f. l'électrode négative (103) est une anode à base de métal comprenant en tant que constituant électrochimique actif un métal qui est oxydé lorsque le dispositif de stockage d'énergie (111) est déchargé, et
g. l'électrode positive (102) est une cathode à air et comprend en tant que constituant électrochimique actif un catalyseur qui permet une réduction de l'oxygène atmosphérique par absorption d'électrons dans la cathode à air,
ainsi que les caractéristiques supplémentaires suivantes :
h : la feuille poreuse (105) comprend une zone centrale dans laquelle ses pores sont remplis d'électrolyte et une zone de bord en forme de bande entourant la zone centrale,
dans laquelle les pores de la nappe poreuse (105) ne sont pas remplis d'électrolyte, et
i : la première partie de boîtier (106) et la deuxième partie de boîtier (107) sont reliées l'une à l'autre par un châssis d'étanchéité périphérique (108) qui est formé d'un agent d'étanchéité ayant été déposé sur la feuille poreuse (105) dans la zone de bord.

2. Dispositif de stockage d'énergie selon la revendication 1, présentant une combinaison des caractéristiques supplémentaires suivantes :
a : La première partie de boîtier (106) est constituée d'un film.
b : La deuxième partie de boîtier (107) est une couche de matière plastique dans laquelle est incorporée une structure de protection métallique (110), qui est en contact direct avec la cathode à air (102).

3. Dispositif de stockage d'énergie selon l'une des revendications précédentes, présentant une combinaison des caractéristiques supplémentaires suivantes :
a : Le châssis d'étanchéité (108) referme, en association avec les parties de boîtier (106, 107), une cavité dans laquelle est disposée la zone centrale de la feuille (105) .
b : Le châssis d'étanchéité circonférentiel est incorporé dans la zone de bord de la structure plane poreuse (105).

4. Dispositif de stockage d'énergie selon l'une des revendications précédentes, présentant une combinaison des caractéristiques supplémentaires suivantes :
a : Il comprend un conducteur électrique (109) relié électriquement à ladite au moins une électrode négative (103) et sortant du boîtier (105).
b. Le conducteur électrique (109) est une couche électriquement conductrice située sur un côté de la première partie de boîtier (106) qui est tourné vers l'intérieur du boîtier (105).

5. Dispositif de stockage d'énergie selon l'une des revendications 2 à 4 précédentes, présentant une combinaison des caractéristiques supplémentaires suivantes :
a : Il comprend un conducteur électrique (110) relié électriquement à ladite au moins une électrode positive (102) et sortant du boîtier (105).
b. Le conducteur électrique (110) est une couche électriquement conductrice sur un côté de la deuxième partie de boîtier (107) qui est tourné vers l'intérieur du boîtier (105) ou est la structure de dérivation métallique incorporée dans la couche de matière plastique de la deuxième partie de boîtier (107).

6. Procédé de production d'un dispositif de stockage d'énergie électrochimique (111) selon l'une des revendications précédentes, comprenant les étapes suivantes :
a : fabrication d'une unité à séparateur et châssis d'étanchéité par
- fourniture de la structure de surface poreuse (105),
- remplissage des pores de la feuille (105) avec l'électrolyte, en formant la zone centrale et la zone de bord entourant la zone centrale,
- application de l'agent d'étanchéité dans la zone de bord en forme de bande pour former le châssis d'étanchéité circonférentiel (108),
et
b : formation du composite constitué de l'électrode (102), de l'électrode (103) et du séparateur (104) par combinaison de l'unité à séparateur-châssis d'étanchéité avec l'électrode positive en couches (102) et l'électrode négative en couches (103),
dans lequel
l'électrode négative (103) est une anode à base de métal comprenant, en tant que constituant électrochimique actif, un métal qui est oxydé lorsque la cellule (111) est déchargée, et l'électrode positive (102) est une cathode à air et comprend, en tant que constituant électrochimique actif, un catalyseur qui permet une réduction de l'oxygène atmosphérique par absorption d'électrons dans la cathode à air.
